# EUROPEAN PATENT APPLICATION

(11) **EP 2 634 212 A1**
(43) Date of publication of application: **04.09.2013**
(21) Application number: 11836496.7
(22) Date of filing: 27.10.2011
(51) Int. Cl.: C08L 21/00, C08K 3/06, C08K 5/42

(54) **METHOD FOR PRODUCING VULCANIZED RUBBER COMPOSITION**

(30) Priority: 29.10.2010 JP 2010243444
(71) Applicant: Sumitomo Chemical Company Limited, Tokyo 104-8260 (JP)
(72) Inventor: UEKITA, Yasuo, Osaka-shi Osaka 554-8558 (JP); TAKEUCHI, Kenichi, Osaka-shi Osaka 554-8558 (JP); IYAMA, Hironobu, Osaka-shi Osaka 554-8558 (JP)
(74) Representative: Brunetti, Fabrizio
(86) International application number: PCT/JP2011/075362
(87) International publication number: WO 2012/057365

(57) **Abstract**

A process for producing a vulcanized rubber composition that includes S-(3-aminopropyl)thiosulfuric acid, a rubber component, a filler, a sulfur component, and a vulcanization accelerator,
the process comprising the following Steps (A), (B) and (C) ;
(A) : a step of kneading S-(3-aminopropyl)thiosulfuric acid having a median diameter (50%D) of 10 µm to 100 µm, a rubber component and a filler,
(B): a step of kneading the kneaded mixture obtained in Step (A), a sulfur component and a vulcanization accelerator, and
(C) : a step of subjecting the kneaded mixture obtained in Step (B) to thermal treatment.

## Description

### Technical Field

The present invention relates to a process for producing a vulcanized rubber composition.

### Background Art

Recently it has been required for automobile to improve fuel efficiency, that is a low fuel consumption, from the viewpoint of a requirement of environmental protection. In the field of automobile tires (hereinafter referred to as tires), it is known that the fuel efficiency of an automobile is improved by improving a viscoelastic property of a vulcanized rubber composition which constitutes tires (The Society of Rubber and Technology, Japan, Gomu Gijyutu Nyuumon, Maruzen Company, Limited., 124)

### Disclosure of the Invention

The present invention provides
<1> a process for producing a vulcanized rubber composition that includes S- (3-aminopropyl) thiosulfuric acid, a rubber component, a filler, a sulfur component, and a vulcanization accelerator, the process comprising the following Steps (A), (B) and (C) ;
   (A) : a step of kneading S-(3-aminopropyl)thiosulfuric acid having a median diameter (50%D) of 10 µm to 100 µm, a rubber component and a filler,
   (B): a step of kneading the kneaded mixture obtained in Step (A), a sulfur component and a vulcanization accelerator, and
   (C) : a step of subjecting the kneaded mixture obtained in Step (B) to thermal treatment; and
<2> the process according to <1>, wherein Step (A) is a step of kneading S-(3-aminopropyl)thiosulfuric acid having a median diameter (50%D) of 10 µm to 70 µm, a rubber component and a filler.

### Best Modes for Carrying Out the Invention

In the present description, "inhibiting a decay of processing stability" means inhibiting altering a scorch time (t5) of an unvulcanized rubber as described below, and "improving a viscoelastic property" means altering the loss factor (tan δ) of a vulcanized rubber as described below.

The present invention is a process for producing a vulcanized rubber composition that includes S-(3-aminopropyl)thiosulfuric acid, a rubber component, a filler, a sulfur component, and a vulcanization accelerator, the process comprising the following Steps (A), (B) and (C) ;
(A) : a step of kneading S-(3-aminopropyl)thiosulfuric acid having a median diameter (50%D) of 10 µm to 100 µm, a rubber component and a filler,
(B): a step of kneading the kneaded mixture obtained in Step (A), a sulfur component and a vulcanization accelerator, and
(C) : a step of subjecting the kneaded mixture obtained in Step (B) to thermal treatment.

First, Step (A) will be explained.

S-(3-Aminopropyl)thiosulfuric acid is the compound represented by the following formula (1).

H₂N-(CH₂)₃-SSO₃H (1)

S-(3-Aminopropyl)thiosulfuric acid can be produced ,for example, by neutralizing a metal salt of S-(3-aminopropyl)thiosulfuric acid with a protonic acid. The metal salt of S-(3-aminopropyl)thiosulfuric acid can be produced by arbitrary known processes such as a process of reacting 3-halopropylamine with sodium thiosulfate, and a process of reacting phthalimide potassium salt with 1,3-dihalopropane, reacting the resulting compound with sodium thiosulfate, and then, hydrolyzing the resulting compound. The resulting S-(3-aminopropyl)thiosulfuric acid can be isolated as a solid by an operation such as concentration and crystallization. The isolated S-(3-aminopropyl) thiosulfuric acid may contain water of about 0.1% to 5%.

The median diameter (50%D) of S-(3-aminopropyl) thiosulfuric acid is 10 to 100 µm, preferably 10 to 95 µm, more preferably 10 to 70 µm, furthermore preferably 20 to 60 µm and particularly preferably 30 to 50 µm. The median diameter can be measured by a laser diffraction method. When the median diameter is not less than 10µm, the decay of processing stability of the unvulcanized rubber tends to be inhibited. When the median diameter is not more than 100µm, preferably not more than 95 µm, and more preferably not more than 70 µm, the dispersibility of S-(3-aminopropyl)thiosulfuric acid is good, and the viscoelastic property of the vulcanized rubber tends to be improved. When the median diameter is in the above-mentioned range, the balance between the processing stability of the unvulcanized rubber and the viscoelastic property of the vulcanized rubber is good.

In the case that the resulting S-(3-aminopropyl)thiosulfuric acid has a median diameter smaller than the above-mentioned range, the median diameter thereof can be made larger, for example, by recrystallization. In the case that the resulting S- (3-aminopropyl)thiosulfuric acid has a median diameter larger than the above-mentioned range, the median diameter thereof can be made smaller by pulverization, classification or the like.

The use amount of S-(3-aminopropyl)thiosulfuric acid is preferably in the range of 0.1 to 10 parts by weight, and more preferably in the range of 0.4 to 3 parts by weight with respect to 100 parts by weight of the rubber component.

The rubber component includes various synthetic rubbers such as polyisoprene rubber (IR), styrene-butadiene copolymer rubber (SBR), polybutadiene rubber (BR), acrylonitrile-butadiene copolymer rubber (NBR), isoprene-isobutylene copolymer rubber (IIR), ethylene-propylene-diene copolymer rubber (EPDM) and halogenated butyl rubber (HR), in addition to natural rubber, epoxidized natural rubber, deproteinized natural rubber and other modified natural rubbers. Among them, highly unsaturated rubbers such as natural rubber, styrene-butadiene copolymer rubber and polybutadiene rubber are preferable, and natural rubber is more preferable. Several rubber components may be used in combination such as a combination of natural rubber and styrene-butadiene copolymer rubber and a combination of natural rubber and polybutadiene rubber.

Examples of natural rubber include grades such as RSS#1, RSS#3, TSR20 and SIR20. As the epoxidized natural rubber, those having a degree of epoxidization of 10 to 60 mol% are preferable. Examples of epoxidized natural rubber include ENR25 and ENR50 produced by Kumpulan Guthrie Bhd. As the deproteinized natural rubber, deproteinized natural rubbers having a total nitrogen content of 0.3 wt% or less are preferable. As the modified natural rubber, preferable are modified natural rubbers containing a polar group obtained by beforehand reacting 4-vinylpyridine, N,N-dialkylaminoethyl acrylate (for example, N,N-diethylaminoethyl acrylate), 2-hydroxy acrylate or the like with natural rubber.

Examples of SBR include emulsion-polymerized SBR and solution-polymerized SBR described in "Rubber Industry Handbook <fourth edition>", p. 210 to 211, edited by The Society of Rubber Science and Technology, Japan. Solution-polymerized SBR is preferable as a rubber component of a tread rubber composition. More preferable are commercially available products including solution-polymerized SBR having a molecular end modified by using 4,4'-bis-(dialkylamino)benzophenone such as "Nipol (registered trademark) NS116" produced by Zeon Corporation, solution-polymerized SBR having a molecular end modified by using a halogenated tin compound such as "SL574" produced by JSR, and a silane-modified solution-polymerized SBR such as "E10" and "E15" produced by Asahi Kasei Corporation, and solution-polymerized SBR having any of nitrogen, tin and silicon or two or more of these elements at a molecular end obtained by modifying the molecular end by using any one of a lactam compound, an amide compound, an urea compound, an N,N-dialkylacrylamide compound, an isocyanate compound, an imide compound, a silane compound having an alkoxy group (e. g. , trialkoxysilane compound) and an aminosilane compound solely or using two or more different compounds among these compounds, such as a combination of a tin compound and a silane compound having an alkoxy group and a combination of an alkylacrylamide compound and a silane compound having an alkoxy group. Oil-extended SBRs obtained by adding an oil such as a process oil and an aroma oil to emulsion-polymerized SBR and solution-polymerized SBR after polymerization are preferable as a rubber component of a tread rubber composition.

Examples of BR include solution-polymerized BR such as high-cis BR having a proportion of cis-1,4-coupling of 90% or more and low-cis BR having a proportion of cis coupling of around 35%, and low-cis BR having a high vinyl content is preferable. More preferable are tin-modified BR such as "Nipol (registered trademark) BR1250H" produced by Zeon Corporation, and solution-polymerized BR having any of nitrogen, tin and silicon or two or more of these elements at a molecular end obtained by modifying the molecular end by using any one of 4,4'-bis-(dialkylamino)benzophenone, a halogenated tin compound, a lactam compound, an amide compound, an urea compound, an N,N-dialkylacrylamide compound, an isocyanate compound, an imide compound, a silane compound having an alkoxy group (e. g. , trialkoxysilane compound) and an aminosilane compound or using two or more different compounds among these compounds, such as a combination of a tin compound and a silane compound having an alkoxy group and a combination of an alkylacrylamide compound and a silane compound having an alkoxy group. These BRs are preferable as a rubber composition for a tread rubber composition and a rubber composition for a side wall, and usually used in a blend with SBR and/or natural rubber. Regarding the blending ratio thereof, it is preferable that the proportion of SBR and/or natural rubber is 60 to 100 wt% and the proportion of BR is 40 to 0 wt% with respect to the total rubber weight for a tread rubber composition. It is preferable that the proportion of SBR and/or natural rubber is 10 to 70 wt% and the proportion of BR is 90 to 30 wt% with respect to the total rubber weight for a side wall rubber composition, and blends in which the proportion of natural rubber is 40 to 60 wt% and the proportion of BR is 60 to 40 wt% with respect to the total rubber weight are more preferable. In this case, also preferable are a blend of modified SBR and unmodified SBR and a blend of modified BR and unmodified BR.

Examples of the filler include those usually used in the field of rubber, such as carbon black, silica, talc, clay, aluminum hydroxide and titanium oxide, and carbon black and silica are preferable and carbon black is more preferable. Examples of the carbon black include those described in "Rubber Industry Handbook <fourth edition>", p. 494, edited by The Society of Rubber Science and Technology, Japan., carbon black such as HAF (High Abrasion Furnace), SAF (Super Abrasion Furnace), ISAF (Intermediate SAF), FEF (Fast Extrusion Furnace), MAF, GPF (General Purpose Furnace) and SRF (Semi-Reinforcing Furnace) are preferable. As the filler for a tire tread rubber composition, carbon black having a CTAB (Cetyl Tri-methyl Ammonium Bromide) surface area of 40 to 250 m²/g, a nitrogen adsorption specific surface area of 20 to 200 m²/g and a particle size of 10 to 50 nm is preferable, carbon black having a CTAB surface area of 70 to 180 m²/g is more preferable, and examples thereof include N110, N220, N234, N299, N326, N330, N330T, N339, N343 and N351 according to the standard of ASTM. A surface-treated carbon black obtained by attaching silica of 0.1 to 50 wt% to the surface of carbon black is also preferable. It is also effective to use several kinds of fillers in combination, such as a combined use of carbon black and silica. It is preferable to use carbon black singly or to use both carbon black and silica in a tire tread rubber composition. For a carcass or side wall rubber composition, carbon black having a CTAB surface area of 20 to 60 m²/g and a particle size of 40 to 100 nm is preferably used, and examples thereof includeN330, N339, N343, N351,N550, N568, N582, N630, N642, N660, N662, N754 and N762 according to the standard of ASTM. The use amount of such fillers is not limited, preferably in the range of 5 to 100 parts by weight per 100 parts by weight of the rubber component. In the case of using carbon black singly as the filler, the use amount thereof is preferably 30 to 80 parts by weight per 100 parts by weight of the rubber component, and in the case of using carbon black together with silica in a tread member application, the use amount thereof is preferably 5 to 60 parts by weight per 100 parts by weight of the rubber component.

Examples of the silica include those having a CTAB surface area of 50 to 180 m²/g or a nitrogen adsorption specific surface area of 50 to 300 m²/g, and commercially available products such as "AQ" and "AQ-N" produced by Tosoh Silica Corporation, "Ultrasil (registered trademark) VN3", "Ultrasil (registered trademark) 360" and "Ultrasil (registered trademark) 7000" produced by Degussa, "Zeosil (registered trademark) 115GR", "Zeosil (registered trademark) 1115MP", "Zeosil (registered trademark) 1205MP" and "Zeosil (registered trademark) Z85MP" produced by Rhodia and "Nipseal (registered trademark) AQ" produced by Nippon Silica Industry Co., Ltd. are preferable. It is also preferable to compound silica having a pH of 6 to 8, silica containing of 0.2 to 1.5 wt% of sodium, micro-spherical silica having a circularity of 1 to 1.3, silicone oils such as a dimethyl silicone oil, organosilicon compounds containing an ethoxysilyl group, silica surface-treated with an alcohol such as ethanol and polyethylene glycol and two or more kinds of silica having differing in nitrogen adsorption specific surface area.

In a passenger automobile tread rubber composition, silica is preferably used, and the use amount thereof is not limited, preferably in the range of 10 to 120 parts by weight per 100 parts by weight of the rubber component. When silica is compounded, it is preferable to further compound 5 to 50 parts by weight of the carbon black per 100 parts by weight of the rubber component, and the compounding ratio of silica/carbon black is preferably 0.7/1 to 1/0.1. When silica is used as the filler, it is usually preferable to add a compound having an element linkable to silica, such as silicon or a compound having a functional group such as alkoxysilane, such as one or more silane coupling agents selected from the group consisting of bis(3-triethoxysilylpropyl) tetrasulfide ("Si-69" produced by Degussa), bis(3-triethoxysilylpropyl) disulfide ("Si-75" produced by Degussa), bis(3-diethoxymethylsilylpropyl) tetrasulfide, bis(3-diethoxymethylsilylpropyl) disulfide, octanethioic acid S-[3-(triethoxysilyl)propyl] ester ("NXT Silane" produced by General Electric Silicones), octanethioic acid S-[3-{(2-methyl-1,3-propanedialkoxy)ethoxysilyl}propyl] ester and octanethioic acid S-[3-{(2-methyl-1,3-propanedialkoxy)methylsilyl}propyl] ester phenyltriethoxysilane, methyltrimethoxysilane, methyltriethoxysilane, methyltriacetoxysilane, methyltributoxysilane, ethyltrimethoxysilane, ethyltriethoxysilane, isobutyltrimethoxysilane, isobutyltriethoxysilane, n-octyltrimethoxysilane, n-octyltriethoxysilane, vinyltrimethoxysilane, vinyltriethoxysilane, vinyltri(methoxyethoxy)silane, phenyltrimethoxysilane, phenyltriethoxysilane, phenyltriacetoxysilane, 3-methacryloxypropyltrimethoxysilane, 3-methacryloxypropyltriethoxysilane, 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, (3-glycidoxypropyl)trimethoxysilane, (3-glycidoxypropyl)triethoxysilane, 2-(3,4-epoxycyclohexyl)ethyltrimethoxysilane, 2-(3,4-epoxycyclohexyl)ethyltriethoxysilane, 3-isocyanatepropyltrimethoxysilane and 3-isocyanatepropyltriethoxysilane, and more preferable are bis(3-triethoxysilylpropyl) tetrasulfide ("Si-69" produced by Degussa), bis(3-triethoxysilylpropyl) disulfide ("Si-75" produced by Degussa) and 3-octanoylthiopropyltriethoxysilane ("NXT silane" produced by General Electric Silicones). When silica is used as the filler, it is also preferable to compound a monohydric alcohol such as ethanol, butanol and octanol, a dihydric or more than dihydric alcohol such as ethylene glycol, diethylene glycol, triethylene glycol, polyethylene glycol, polypropylene glycol, pentaerythritol and polyether polyol , an N-alkylamine, an amino acid, liquid polybutadiene having a carboxyl- or amine-modified molecular end, and the like, in addition to silica and a compound having an element linkable to silica, such as silicon or having a functional group such as alkoxysilane.

Aluminum hydroxide includes those having a nitrogen adsorption specific surface area of 5 to 250 m²/g and a DOP feeding amount of 50 to 100 ml/100 g.

It is preferable that zinc oxide and stearic acid are compounded and kneaded in addition to S- (3-aminopropyl)thiosulfuric acid, the rubber component and the filler. The use amount of zinc oxide is preferably in the range of 1 to 15 parts by weight and more preferably in the range of 3 to 8 parts by weight per 100 parts by weight of the rubber component. The use amount of stearic acid is preferably in the range of 0.5 to 10 parts by weight and more preferably in the range of 1 to 5 parts by weight per 100 parts by weight of the rubber component.

The kneading of S-(3-aminopropyl)thiosulfuric acid, the rubber component and the filler can be carried out by using a kneading apparatus such as a Banbury mixer. The kneading is usually accompanied by heat generation. The temperature of the mixture under kneading at the end of kneading is preferably in the range of 140°C to 180°C and more preferably in the range of 150°C to 170°C from the viewpoint of improving the viscoelastic property of the vulcanized rubber which is finally obtained. In the case that the temperature of the mixture under kneading at the end of kneading is not lower than 140°C, the reaction of S- (3-aminopropyl) thiosulfuric acid and the filler tends to proceed efficiently. In the case that the temperature of the mixture under kneading at the end of kneading is not higher than 180°C, the degradation or gelation of the rubber component tend to be inhibited.

The kneading time is preferably 1 minute to 10 minutes and more preferably in the range of 2 minutes to 7 minutes from the viewpoint of improving the viscoelastic property of the vulcanized rubber which is finally obtained. In the case that the kneading time is not less than 1 minute, the filler in the rubber component tends to be dispersed well. In the case that the kneading time is not more than 10 minutes, the degradation or gelation of the rubber component tend to be inhibited.

Next, Step (B) will be explained. In the present description, "unvulcanized rubber composition" means the rubber composition obtained in this step.

The sulfur component includes powdered sulfur, precipitated sulfur, colloidal sulfur, insoluble sulfur and highly dispersible sulfur, and powdered sulfur is preferable. In the case of use in a tire member having a large sulfur content such as a belt member, insoluble sulfur is preferable. In the present description, the sulfur component does not include S-(3-aminopropyl)thiosulfuric acid and a vulcanization accelerator. The use amount of the sulfur component is preferably in the range of 0.3 to 5 parts by weight and more preferably in the range of 0.5 to 3 parts by weight per 100 parts by weight of the rubber component.

The vulcanization accelerator includes thiazole vulcanization accelerators, sulfenamide vulcanization accelerators and guanidine vulcanization accelerators described in Rubber Industry Handbook <fourth edition>, pp. 412 to 413 (published by The Society of Rubber Science and Technology, Japan on January 20-th, 1994). Specific examples thereof include N-cyclohexyl-2-benzothiazolylsulfenamide (CBS), N-tert-butyl-2-benzothiazolylsulfenamide (BBS), N,N-dicyclohexyl-2-benzothiazolylsulfenamide (DCBS), 2-mercaptobenzothiazole (MBT), dibenzothiazyl disulfide (MBTS) and diphenylguanidine (DPG). Morpholine disulfide, which is a known vulcanizing agent, can also be used. When carbon black is used as the filler, it is preferable to use N-cyclohexyl-2-benzothiazolylsulfenamide (CBS), N-tert-butyl-2-benzothiazolylsulfenamide (BBS), N,N-dicyclohexyl-2-benzothiazolylsulfenamide (DCBS) or dibenzothiazyl disulfide (MBTS) together with diphenylguanidine (DPG). When silica and carbon black are used in combination as the filler, it is preferable to use any of N-cyclohexyl-2-benzothiazolylsulfenamide (CBS), N-tert-butyl-2-benzothiazolylsulfenamide (BBS), N,N-dicyclohexyl-2-benzothiazolylsulfenamide (DCBS) and dibenzothiazyl disulfide (MBTS) together with diphenylguanidine (DPG). In the present description, the vulcanization accelerator does not include S-(3-aminopropyl)thiosulfuric acid.

The ratio of the sulfur component and the vulcanization accelerator is not limited and the ratio by weight of the sulfur component to the vulcanization accelerator (sulfur component/vulcanization accelerator) is preferably in the range of 2/1 to 1/2. In an application wherein the improvement in heat resistance is particularly needed, the method of improving the heat resistance of the rubber component which is mainly composed of natural rubber, in which makes the ratio of sulfur /vulcanization accelerator is adjusted to not more than 1, what is called EV vulcanization, is preferably used in the present invention.

The kneading of the kneaded mixture obtained in above-mentioned Step (A), sulfur component and the vulcanization accelerator can be carried out by using a kneading apparatus such as an open mixer and a Banbury mixer. The temperature of the mixture under kneading at the end of kneading is preferably in the range of 30°C to 100°C and more preferably in the range of 50°C to 80°C. From the viewpoint that the dispersibility of the sulfur component and the vulcanization accelerator in the rubber component tends to be improved, the temperature of the mixture under kneading at the end of kneading is preferably not lower than 30°C. From the viewpoint that the decay of processing stability tends to be inhibited, the temperature of the mixture under kneading at the end of kneading is preferably not higher than 100°C.

The kneading time is preferably 1 minute to 10 minutes and more preferably in the range of 2 minutes to 8 minutes from the viewpoint of improving the viscoelastic property of the vulcanized rubber which is finally obtained. In the case that the kneading time is not less than 1 minute, the dispersibility of sulfur and the vulcanization accelerator in the rubber component tends to be improved. In the case that the kneading time is not more than 10 minutes, the degradation of the rubber component tends to be inhibited.

Next, Step (C) will be explained. In the present description, "vulcanized rubber composition" means the rubber composition obtained in this step.

Thermal treatment in this step is commonly referred to as vulcanization, and is usually carried out at normal pressure or under increased pressure. The treatment temperature is preferably in the range of 120°C to 180°C, and more preferably in the range of 140°C to 170°C.

For example, the treatment time is preferably set to 5 minutes to 10 minutes longer than the 90% vulcanization time (t_{c}(90)) of the kneaded mixture obtained in the above-mentioned Step (B), t_{c}(90) obtained according to JIS K 6300-2.

The process of the present invention usually contains a step of processing the kneaded mixture obtained in Step (B) into a specific condition before treating the kneaded mixture obtained in Step (B) in thermal treatment of Step (C).

Here "the step of processing the kneaded mixture into a specific condition" includes "a step of coating the kneaded mixture on a steel cord", "a step of coating the kneaded mixture on a carcass fiber cord" and "a step of processing the kneaded mixture into the shape of a tread member", in the field of a tire. Members such as a belt, a carcass, an inner liner, a side wall and a tread (cap tread or under tread) obtained by these steps are, usually, further molded into the shape of a tire together with other members by methods usually conducted in the field of a tire, that is, a step of incorporating the kneaded mixture into a tire is carried out, and Step (C) of carrying out the thermal treatment in the condition of a green tire containing the kneaded mixture. The thermal treatment is usually carried out under increased pressure. The vulcanized rubber composition obtained by the process of the present invention contains the vulcanized rubber composition which composes the above-mentioned members of tire thus given.

The fuel efficiency of the automobile applied thus given tire is improved, and the low-fuel consumption is achieved.

### Examples

The present invention is explained in further detail as shown in the examples below, but the present invention is not limited thereby.

### Production Example 1: S-(3-aminopropyl)thiosulfuric acid

Into a reaction vessel purged with nitrogen, were added 100 g (0.77 mole) of hydrochloride of 3-chloropropylamine, 180 mL of water and 200.4 g (0.81 mole) of pentahydrate of sodium thiosulfate, and the resulting mixture was stirred for 5 hours at a bath temperature of 70 to 80°C. The reaction mixture was cooled overnight and was filtrated to afford a crystal. The crystal was washed with water and then methanol. The resulting crystal was dried at 50°C for 4 hours to afford S-(3-aminopropyl)thiosulfuric acid. The acquisition amount of the crystal was 97.8 g. ¹H-NMR (270.05 MHz, D₂O) δₚₚₘ: 3.0-3.1 (4H, m), 2.0-2.1 (2H,m)

The median diameter (50%D) of the resulting S-(3-aminopropyl)thiosulfuric acid was measured by laser diffractometry with SALD-2000J produced by Shimadzu Corporation and was found to be 185 µm. The resulting S-(3-aminopropyl)thiosulfuric acid is referred to as S-(3-aminopropyl)thiosulfuric acid (A1).

### <Measuring operation>

The resulting S-(3-aminopropyl)thiosulfuric acid was dispersed into the mixture solution of the following dispersion solvent (toluene) and the dispersing agent (10 wt% sodium sulfosuccinate di-2-ethylhexyl/ toluene solution) at room temperature. The resulting dispersion was stirred for 5 minutes while exposed to ultrasonic wave to give the test solution. The test solution was moved to the batch cell, and a minute later, the median diameter was measured (the refractive index was 1.70-0.20i).

### Production Examples 2-6

(A1) was crashed to be prepared S-(3-aminopropyl)thiosulfuric acids (A2)-(A6) which had the median diameter (50%D) given in Table 1. The median diameter was measured by the same measuring operation as described in Production Example 1.

**[Table 1]**

| Production Example | S-(3-Aminopropyl)thiosulfuric acid | Median diameter (50%D) |
|---|---|---|
| 1 | (A1) | 185 µm |
| 2 | (A2) | 7 µm |
| 3 | (A3) | 29 µm |
| 4 | (A4) | 41 µm |
| 5 | (A5) | 66 µm |
| 6 | (A6) | 92 µm |

### Example 1

### <Step (A)>

In a Banbury mixer (600 mL Laboplastomill manufactured by Toyo Seiki Co., Ltd.), were compounded and kneaded 100 parts by weight of natural rubber (Rss#1), 45 parts by weight of HAF (produced by Asahi Carbon Co., Ltd., trade name "Asahi #70"), 3 parts by weight of stearic acid, 5 parts by weight of zinc oxide, 1 part by weight of an anti-aging agent (N-phenyl-N'-1,3-dimethylbutyl-p-phenylenediamine (6PPD): trade name "Antigen (registered trademark) 6C" produced by Sumitomo Chemical Co., Ltd.) and 0.4 parts by weight of the S-(3-aminopropyl)thiosulfuric acid (A3) obtained in the above-described Production Example 3, affording a kneaded mixture. This step was carried out by kneading at a mixer preset temperature of 120°C at a mixer revolution rate of 50 rpm for 5 minutes after having added various reagents and the filler. The temperature at the end of kneading was 163°C.

### <Step (B)>

The kneaded mixture obtained in Step (A), 1 part by weight of a vulcanization accelerator (N-cyclohexyl-2-benzothiazolesulfenamide (CBS)) and 2 parts by weight of sulfur were compounded and kneaded in an open roll machine at a temperature of 60°C, to afford an unvulcanized rubber composition.

### <Step (C)>

Thermal treatment was applied to the unvulcanized rubber composition obtained in Step (B) at 145°C, to afford a vulcanized rubber composition.

### Reference Example 1

The same procedure as that used in Example 1 was carried out except that S-(3-aminopropyl)thiosulfuric acid (A3) was not used, affording an unvulcanized rubber composition and a vulcanized rubber composition. The temperature of the kneaded mixture after having kneaded in Step (A) was 162°C.

### Test Example 1

The scorch time, the 90% vulcanization time and the dispersibility of S-(3-aminopropyl)thiosulfuric acid of the unvulcanized rubber composition obtained in Step (B) of Example 1, and the dynamic viscoelastic property of the vulcanized rubber composition obtained in Step (B) of Example 1 were measured as follows.

### (1) Scorch time (t5)

According to JIS K 6300-1, the scorch time was measured by a Mooney viscometer (trade name "AM-3", produced by Toyo Seiki Seisaku-Sho, Ltd.) with a rotor type of L at a test temperature of 125°C.

### (2) 90% vulcanization time (t_{c}(90))

According to JIS K 6300-2, the 90% vulcanization time was measured by a Rotorless rheometer (trade name "RLR-4", manufactured by Toyo Seiki Seisaku-Sho, Ltd.) at a test temperature of 145°C at an amplitude angle of 1° at a frequency of vibration of 100 cpm.

### (3) Dispersibility of S-(3-aminopropyl)thiosulfuric acid

The unvulcanized rubber composition was formed into sheet and the cross section thereof was observed visually to determine whether there was unmolten S-(3-aminopropyl)thiosulfuric acid or not.

### (4) Dynamic viscoelastic property (tan δ)

The viscoelastic property was measured by a viscoelastic property analyzer manufactured by Ueshima Seisakusho Co. , Ltd.

Conditions include at a temperature of 60°C, an initial strain of 10%, a dynamic strain of 2.5%, and a frequency of 10 Hz.

The 90% vulcanization time of the unvulcanized rubber composition obtained in Step (B) of Example 1 was 9 minutes. Molten S- (3-aminopropyl) thiosulfuric acid was not observed, and the dispersibility was good. The scorch time of the unvulcanized rubber composition obtained in Step (B) of Example 1 was shortened by 26% in comparison with that of the unvulcanized rubber composition obtained in Reference Example 1. The dynamic viscoelastic property (tan δ at 60°C) of the vulcanized rubber composition obtained in Step (C) of Example 1 was lowered by 23% in comparison with that of the vulcanized rubber composition obtained in Reference Example 1. A vulcanized rubber composition wherein the viscoelastic property had been improved was produced successfully while inhibiting the decay of processing stability of the unvulcanized rubber composition.

### Example 2

The same procedure as that used in Example 1 was carried out except that S-(3-aminopropyl)thiosulfuric acid (A4) obtained in Production Example 4 was used instead of S-(3-aminopropyl)thiosulfuric acid (A3) obtained in Production Example 3, affording an unvulcanized rubber composition and a vulcanized rubber composition. The temperature of the kneaded mixture after having kneaded in Step (A) was 163°C.

### Test Example 2

The same measurement as that in Test Example 1 was carried out. The 90% vulcanization time of the unvulcanized rubber composition obtained in Step (B) of Example 2 was 9 minutes. Molten S- (3-aminopropyl) thiosulfuric acid was not observed, and the dispersibility was good. The scorch time of the unvulcanized rubber composition obtained in Step (B) of Example 2 was shortened by 27% in comparison with that of the unvulcanized rubber composition obtained in Reference Example 1. The dynamic viscoelastic property (tan δ at 60°C) of the vulcanized rubber composition obtained in Step (C) of Example 2 was lowered by 24% in comparison with that of the vulcanized rubber composition obtained in Reference Example 1. A vulcanized rubber composition wherein the viscoelastic property had been improved was produced successfully while inhibiting the decay of processing stability of the unvulcanized rubber composition.

### Example 3

The same procedure as that used in Example 1 was carried out except that S-(3-aminopropyl)thiosulfuric acid (A5) obtained in Production Example 5 was used instead of S-(3-aminopropyl)thiosulfuric acid (A3) obtained in Production Example 3, affording an unvulcanized rubber composition and a vulcanized rubber composition. The temperature of the kneaded mixture after having kneaded in Step (A) was 162°C.

### Test Example 3

The same measurement as that in Test Example 1 was carried out. The 90% vulcanization time of the unvulcanized rubber composition obtained in Step (B) of Example 3 was 9 minutes. Molten S-(3-aminopropyl)thiosulfuric acid was not observed, and the dispersibility was good. The scorch time of the unvulcanized rubber composition obtained in Step (B) of Example 3 was shortened by 27% in comparison with that of the unvulcanized rubber composition obtained in Reference Example 1. The dynamic viscoelastic property (tan δ at 60°C) of the vulcanized rubber composition obtained in Step (C) of Example 3 was lowered by 23% in comparison with that of the vulcanized rubber composition obtained in Reference Example 1. A vulcanized rubber composition wherein the viscoelastic property had been improved was produced successfully while inhibiting the decay of processing stability of the unvulcanized rubber composition.

### Example 4

The same procedure as that used in Example 1 was carried out except that S-(3-aminopropyl)thiosulfuric acid (A6) obtained in Production Example 6 was used instead of S-(3-aminopropyl)thiosulfuric acid (A3) obtained in Production Example 3, affording an unvulcanized rubber composition and a vulcanized rubber composition. The temperature of the kneaded mixture after having kneaded in Step (A) was 166°C.

### Test Example 4

The same measurement as that in Test Example 1 was carried out. The 90% vulcanization time of the unvulcanized rubber composition obtained in Step (B) of Example 3 was 10 minutes. Molten S-(3-aminopropyl)thiosulfuric acid was not observed, and the dispersibility was good. The scorch time of the unvulcanized rubber composition obtained in Step (B) of Example 3 was shortened by 19% in comparison with that of the unvulcanized rubber composition obtained in Reference Example 1. The dynamic viscoelastic property (tan δ at 60°C) of the vulcanized rubber composition obtained in Step (C) of Example 3 was lowered by 20% in comparison with that of the vulcanized rubber composition obtained in Reference Example 1. A vulcanized rubber composition wherein the viscoelastic property had been improved was produced successfully while inhibiting the decay of processing stability of the unvulcanized rubber composition.

### Comparative Reference Example 1

The same procedure as that used in Example 1 was carried out except that S-(3-aminopropyl)thiosulfuric acid (A1) obtained in Production Example 1 was used instead of S-(3-aminopropyl)thiosulfuric acid (A3) obtained in Production Example 3, affording an unvulcanized rubber composition and a vulcanized rubber composition. The temperature of the kneaded mixture after having kneaded in Step (A) was 162°C.

### Comparative Test Example 1

The same measurement as that in Test Example 1 was carried out. The 90% vulcanization time of the unvulcanized rubber composition obtained in Step (B) of Comparative Reference Example 1 was 10 minutes. Molten S-(3-aminopropyl)thiosulfuric acid was observed, and the dispersibility was not good. The scorch time of the unvulcanized rubber composition obtained in Step (B) of Comparative Reference Example 1 was shortened by 18% in comparison with that of the unvulcanized rubber composition obtained in Reference Example 1. The dynamic viscoelastic property (tan δ at 60°C) of the vulcanized rubber composition obtained in Step (C) of Comparative Reference Example 1 was lowered only by 15% in comparison with that of the vulcanized rubber composition obtained in Reference Example 1. The decay of processing stability of the unvulcanized rubber composition was inhibited successfully, but the improvement of the viscoelastic property was not enough in comparison with of Examples 1-3.

### Comparative Reference Example 2

The same procedure as that used in Example 1 was carried out except that S-(3-aminopropyl)thiosulfuric acid (A2) obtained in Production Example 2 was used instead of S-(3-aminopropyl)thiosulfuric acid (A3) obtained in Production Example 3, affording an unvulcanized rubber composition and a vulcanized rubber composition. The temperature of the kneaded mixture after having kneaded in Step (A) was 164°C.

### Comparative Test Example 2

The same measurement as that in Test Example 1 was carried out. The 90% vulcanization time of the unvulcanized rubber composition obtained in Step (B) of Comparative Reference Example 2 was 9 minutes. Molten S- (3-aminopropyl) thiosulfuric acid was not observed, and the dispersibility was good. The scorch time of the unvulcanized rubber composition obtained in Step (B) of Comparative Reference Example 2 was shortened by 30% in comparison with that of the unvulcanized rubber composition obtained in Reference Example 1. The dynamic viscoelastic property (tan δ at 60°C) of the vulcanized rubber composition obtained in Step (C) of Comparative Reference Example 2 was lowered by 23% in comparison with that of the vulcanized rubber composition obtained in Reference Example 1. The improvement of the viscoelastic property was equal, but the inhibition of the decay of processing stability of the unvulcanized rubber composition was not enough in comparison with Examples 1-3.

The above result was arranged in Table 2.

In the case that the shortening of the scorch time was less than 30% in comparison with that of the unvulcanized rubber composition obtained in Reference Example 1, the processing stability was evaluated as o, and in the case that the shortening of the scorch time was not less than 30% in comparison with that of the unvulcanized rubber composition obtained in Reference Example 1, the processing stability was evaluated as x.

In the case that the dynamic viscoelastic property (tan δ at 60°C) was not less than 20% in comparison with that of the vulcanized rubber composition obtained in Reference Example 1, the viscoelastic property was evaluated as o, and in the case that the dynamic viscoelastic property (tan δ at 60°C) was less than 20% in comparison with that of the vulcanized rubber composition obtained in Reference Example 1, the viscoelastic property was evaluated as x.

**[table 2]**

| | Com. Ref. Ex. 2 | Ex. 1 | Ex. 2 | Ex. 3 | Ex. 4 | Com. Ref. Ex. 1 |
|---|---|---|---|---|---|---|
| Median diameter | 7 µm | 29 µm | 41 µm | 66 µm | 92 µm | 185 µm |
| Processing stability | × | ○ | ○ | ○ | ○ | ○ |
| Viscoelastic property | ○ | ○ | ○ | ○ | ○ | × |

Table 2 apparently shows that the balance between the processing stability of the unvulcanized rubber composition and the viscoelastic property of the vulcanized rubber composition is good in the case that the median diameter (50%D) of S-(3-aminopropyl)thiosulfuric acid is in the range of 10 µm to 100 µm.

### Example 5

Steel cord treated with brass plating is coated with the kneaded mixture obtained in Step (B) of each of Examples 1 to 3 to give a belt. In accordance with a usual process, a green tire is molded by using the given belt, and the given green tire is heated and pressurized in a vulcanizer to give a vulcanized tire.

### Example 6

The kneaded mixture obtained in Step (B) of each of Examples 1 to 3 is extruded to give a tread member. In accordance with a usual process, a green tire is molded by using the given tread member, and the given green tire is heated and pressurized in a vulcanizer to give a vulcanized tire.

### Example 7

The kneaded mixture obtained in Step (B) of each of Examples 1 to 3 is extruded to prepare the kneaded mixture in a shape according to the shape of carcass. The kneaded mixture is coated on a polyester carcass fiber cord one above the other to give a carcass. In accordance with a usual process, a green tire is molded by using the given carcass, and the given green tire is heated and pressurized in a vulcanizer to give a vulcanized tire.

### Example 8

The vulcanized rubber composition obtained by the following Step (A) to Step (C) is suitable for a cap tread application.

### <Step (A) >

In a Banbury mixer (600 mL Laboplastomill manufactured by Toyo Seiki Co., Ltd.), are compounded and kneaded 100 parts by weight of styrene-butadiene copolymer rubber (SBR#1502 produced by Sumitomo Chemical Co., Ltd.), 45 parts by weight of ISAF-HM (produced by Asahi Carbon Co., Ltd., trade name "Asahi #80"), 2 parts by weight of stearic acid, 3 parts by weight of zinc oxide, 1 part by weight of the S-(3-aminopropyl)thiosulfuric acid (A3) obtained in Production Example 3, 1 part by weight of an anti-aging agent (N-phenyl-N'-1,3-dimethylbutyl-p-phenylenediamine (6PPD): trade name "Antigen (registered trademark) 6C" produced by Sumitomo Chemical Co., Ltd.) and 2 parts by weight of wax ("OZOACE-0355" produced by Nippon Seiro CO. , Ltd.), affording a rubber composition. This step is carried out by kneading at a mixer revolution rate of 50 rpm for 5 minutes after having added various reagents and the filler. The rubber temperature at this time is 160 to 175°C.

### <Step (B)>

The rubber composition obtained in Step (A), 3 parts by weight of a vulcanization accelerator (N-cyclohexyl-2-benzothiazolesulfenamide (CBS)) and 2 parts by weight of sulfur are compounded and kneaded in an open roll machine at a temperature of 60 to 80°C, to afford a kneaded mixture.

### <Step (C)>

Thermal treatment is applied to the kneaded mixture obtained in Step (B) at 145°C, to afford a vulcanized rubber composition.

### Example 9

The vulcanized rubber composition obtained by the following Step (A) to Step (C) is suitable for an under tread application.

### <Step (A) >

In a Banbury mixer (600 mL Laboplastomill manufactured by Toyo Seiki Co. , Ltd.), are compounded and kneaded 100 parts by weight of styrene-butadiene copolymer rubber (SBR#1502 produced by Sumitomo Chemical Co., Ltd.), 35 parts by weight of ISAF-HM (produced by Asahi Carbon Co., Ltd., trade name "Asahi #80"), 2 parts by weight of stearic acid, 3 parts by weight of zinc oxide, 1 part by weight of the S-(3-aminopropyl)thiosulfuric acid (A3) obtained in Production Example 3, 1 part by weight of an anti-aging agent (N-phenyl-N'-1,3-dimethylbutyl-p-phenylenediamine (6PPD): trade name "Antigen (registered trademark) 6C" produced by Sumitomo Chemical Co., Ltd.) and 2 parts by weight of wax ("OZOACE-0355" produced by Nippon Seiro CO. , Ltd.), affording a rubber composition. This step is carried out by kneading at a mixer revolution rate of 50 rpm for 5 minutes after having added various reagents and the filler. The rubber temperature at this time is 160 to 175°C.

### <Step (B)>

The rubber composition obtained in Step (A), 2 parts by weight of a vulcanization accelerator (N-cyclohexyl-2-benzothiazolesulfenamide (CBS)), 0.5 parts by weight of a vulcanization accelerator (diphenylguanidine (DPG)), 0.8 parts by weight of a vulcanization accelerator (dibenzothiazyl disulfide (MBTS)) and 1 part by weight of sulfur are compounded and kneaded in an open roll machine at a temperature of 60 to 80°C, to afford a kneaded mixture.

### <Step (C)>

Thermal treatment is applied to the kneaded mixture obtained in Step (B) at 145°C, to afford a vulcanized rubber composition.

### Example 10

The vulcanized rubber composition obtained by the following Step (A) to Step (C) is suitable for a belt application.

### <Step (A) >

In a Banbury mixer (600 mL Laboplastomill manufactured by Toyo Seiki Co., Ltd.), are compounded and kneaded 100 parts by weight of natural rubber (RSS#1), 45 parts by weight of HAF (produced by Asahi Carbon Co., Ltd., trade name "Asahi #70"), 3 parts by weight of stearic acid, 5 parts by weight of zinc oxide, 1 part by weight of the S- (3-aminopropyl) thiosulfuric acid (A3) obtained in Production Example 3, 10 parts by weight of aqueous silica ("Nipseal (registered trademark) AQ" produced by Nippon Silica Industry Co., Ltd.), 2 parts by weight of an anti-aging agent (FR, trade name "Antigenoxydant FR", produced by Matsubarasangyo), 2 parts by weight of resorcin and 2 parts by weight of cobalt naphthenate, affording a rubber composition. This step is carried out by kneading at a mixer revolution rate of 50 rpm for 5 minutes after having added various reagents and the filler. The rubber temperature at this time is 160 to 175°C.

### <Step (B)>

The rubber composition obtained in Step (A), 1 part by weight of a vulcanization accelerator (N,N-dicyclohexyl-2-benzothiazolylsulfenamide (DCBS)), 6 parts by weight of sulfur and 3 parts by weight of methoxymethylol melamine resin (trade name "Sumikanol 507AP" produced by Sumitomo Chemical Co., Ltd.) are compounded and kneaded in an open roll machine at a temperature of 60 to 80°C, to afford a kneaded mixture.

### <Step (C)>

Thermal treatment is applied to the kneaded mixture obtained in Step (B) at 145°C, to afford a vulcanized rubber composition.

### Example 11

The vulcanized rubber composition obtained by the following Step (A) to Step (C) is suitable for an inner liner application.

### <Step (A) >

In a Banbury mixer (600 mL Laboplastomill manufactured by Toyo Seiki Co., Ltd.), are compounded and kneaded 100 parts by weight of halogenated butyl rubber ("Br-IIR2255", produced by Exxon Mobil Corporation), 60 parts by weight of GPF, 1 part by weight of stearic acid, 3 parts by weight of zinc oxide, 1 part by weight of the S-(3-aminopropyl)thiosulfuric acid (A3) obtained in Production Example 3 and 10 parts by weight of paraffin oil ("Dyana process oil" produced by Idemitsu Kosan Co., Ltd.), affording a rubber composition. This step is carried out by kneading at a mixer revolution rate of 50 rpm for 5 minutes after having added various reagents and the filler. The rubber temperature at this time is 160 to 175°C.

### <Step (B)>

The rubber composition obtained in Step (A), 1 part by weight of an anti-aging agent (condensation product of aniline and acetone (TMDQ)), 1 part by weight of a vulcanization accelerator (dibenzothiazyl disulfide (MBTS)) and 2 parts by weight of sulfur are compounded and kneaded in an open roll machine at a temperature of 60 to 80°C, to afford a kneaded mixture.

### <Step (C)>

Thermal treatment is applied to the kneaded mixture obtained in Step (B) at 145°C, to afford a vulcanized rubber composition.

### Example 12

The vulcanized rubber composition obtained by the following Step (A) to Step (C) is suitable for a side wall application.

### <Step (A) >

In a Banbury mixer (600 mL Laboplastomill manufactured by Toyo Seiki Co., Ltd.), are compounded and kneaded 40 parts by weight of natural rubber (RSS#3), 60 parts by weight of polybutadiene rubber ("BR150B" produced by UBE INDUSTRIES, Ltd.), 50 parts by weight of FEF, 2.5 parts by weight of stearic acid, 3 parts by weight of zinc oxide, 1 part by weight of the S-(3-aminopropyl)thiosulfuric acid (A3) obtained in Production Example 3, 2 parts by weight of an anti-aging agent (N-phenyl-N'-1,3-dimethylbutyl-p-phenylenediamine (6PPD): trade name "Antigen (registered trademark) 6C" produced by Sumitomo Chemical Co., Ltd.), 10 parts by weight of aroma oil ("NC-140" produced by COSMO OIL Co. , Ltd.) and 2 parts by weight of wax ("Sunnok (registered trademark) wax" produced by OUCHI SHINKO CHEMICAL INDUSTRIAL CO.,LTD.), affording a rubber composition. This step is carried out by kneading at a mixer revolution rate of 50 rpm for 5 minutes after having added various reagents and the filler. The rubber temperature at this time is 160 to 175°C.

### <Step (B)>

The rubber composition obtained in Step (A), 0.75 parts by weight of a vulcanization accelerator (N-tert-butyl-2-benzothiazolylsulfenamide (BBS)) and 1.5 parts by weight of sulfur are compounded and kneaded in an open roll machine at a temperature of 60 to 80°C, to afford a kneaded mixture.

### <Step (C)>

Thermal treatment is applied to the kneaded mixture obtained in Step (B) at 145°C, to afford a vulcanized rubber composition.

### Example 13

The vulcanized rubber composition obtained by the following Step (A) to Step (C) is suitable for a carcass application.

### <Step (A) >

In a Banbury mixer (600 mL Laboplastomill manufactured by Toyo Seiki Co., Ltd.), are compounded and kneaded 70 parts by weight of natural rubber (TSR20), 30 parts by weight of styrene-butadiene copolymer rubber ("SBR#1502" produced by Sumitomo Chemical Co., Ltd.), 60 parts by weight of N339 (produced by Mitsubishi Chemical Corporation), 2 parts by weight of stearic acid, 5 parts by weight of zinc oxide, 7 parts by weight of process oil ("Dyana process PS32" produced by Idemitsu Kosan Co., Ltd.) and 1 part by weight of Sodium salt of S-(3-aminopropyl)thiosulfuric acid (A3), affording a rubber composition. This step is carried out by kneading at a mixer revolution rate of 50 rpm for 5 minutes after having added various reagents and the filler. The rubber temperature at this time is 160 to 175°C.

### <Step (B)>

The rubber composition obtained in Step (A), 1 part by weight of a vulcanization accelerator (N-tert-butyl-2-benzothiazolylsulfenamide (BBS)), 3 parts by weight of sulfur, 1 part by weight of an anti-aging agent (N-phenyl-N'-1,3-dimethylbutyl-p-phenylenediamine (6PPD): trade name "Antigen (registered trademark) 6C" produced by Sumitomo Chemical Co., Ltd.) and 1 part by weight of an anti-aging agent (condensation product of aniline and acetone (TMDQ)) are compounded and kneaded in an open roll machine at a temperature of 60 to 80°C, to afford a kneaded mixture.

### <Step (C)>

Thermal treatment is applied to the kneaded mixture obtained in Step (B) at 145°C, to afford a vulcanized rubber composition.

### Example 14

The vulcanized rubber composition obtained by the following Step (A) to Step (C) is suitable for a cap tread application.

### <Step (A) >

In a Banbury mixer (600 mL Laboplastomill manufactured by Toyo Seiki Co., Ltd.), are compounded and kneaded 100 parts by weight of styrene-butadiene copolymer rubber ("SBR#1500" produced by JSR), 78.4 parts by weight of silica (trade name "Ultrasil (registered trademark) VN3-G" produced by Degussa), 6.4 parts by weight of carbon black (trade name "N-339", produced by Mitsubishi Chemical Corporation), 6.4 parts by weight of silane coupling agents (bis (3-triethoxysilylpropyl) tetrasulfide: trade name "Si-69" produced by Degussa), 47.6 parts by weight of process oil (trade name "NC-140" produced by COSMO OIL Co., Ltd.), 1. 5 parts by weight of an anti-aging agent (N-phenyl-N'-1,3-dimethylbutyl-p-phenylenediamine (6PPD): trade name "Antigen (registered trademark) 6C" produced by Sumitomo Chemical Co., Ltd.), 2 parts by weight of zinc oxide, 2 parts by weight of stearic acid and 3 parts by weight of the S-(3-aminopropyl)thiosulfuric acid (A3) obtained in Production Example 3, affording a rubber composition. This step is handled in a temperature range of 70°C to 120°C. The step is carried out by kneading at a mixer revolution rate of 80 rpm for 5 minutes after having added various reagents and the filler, and continuously at a mixer revolution rate of 100 rpm for 5 minutes.

### <Step (B)>

The rubber composition obtained in Step (A), 1 part by weight of a vulcanization accelerator (N-cyclohexyl-2-benzothiazolylsulfenamide (CBS)), 1 part by weight of a vulcanization accelerator (diphenylguanidine (DPG)), 1.5 parts by weight of wax (trade name "Sunnok (registered trademark) N" produced by OUCHI SHINKO CHEMICAL INDUSTRIAL CO.,LTD.) and 1.4 parts by weight of sulfur are compounded and kneaded in an open roll machine at a temperature of 30 to 80°C, to afford a kneaded mixture.

### <Step (C)>

Thermal treatment is applied to the kneaded mixture obtained in Step (B) at 160°C, to afford a vulcanized rubber composition.

### Example 15

The same procedure as that used in Example 12 is carried out except that solution-polymerized SBR ("Asaprene (registered trademark)", produced by Asahi Kasei Chemicals Corporation) is used instead of styrene-butadiene copolymer rubber ("SBR#1500" produced by JSR), affording a vulcanized rubber composition. The vulcanized rubber composition is suitable for a cap tread application.

### Example 16

The same procedure as that used in Example 12 is carried out except that styrene-butadiene copolymer rubber ("SBR#1712" produced by JSR) is used instead of styrene-butadiene copolymer rubber ("SBR#1500" produced by JSR), the use amount of process oil is changed to 21 parts by weight and zinc oxide is added in Step (B), affording a vulcanized rubber composition. The vulcanized rubber composition is suitable for a cap tread application.

### Industrial Applicability

The production process of the present invention enables producing a vulcanized rubber composition wherein the viscoelastic property has been improved while inhibiting the decay of processing stability of the unvulcanized rubber composition.

## Claims

1. A process for producing a vulcanized rubber composition that includes S- (3-aminopropyl)thiosulfuric acid, a rubber component, a filler, a sulfur component, and a vulcanization accelerator,
the process comprising the following Steps (A), (B) and (C) ;
(A) : a step of kneading S- (3-aminopropyl) thiosulfuric acid having a median diameter (50%D) of 10 µm to 100 µm, a rubber component and a filler,
(B): a step of kneading the kneaded mixture obtained in Step (A), a sulfur component and a vulcanization accelerator, and
(C) : a step of subjecting the kneaded mixture obtained in Step (B) to thermal treatment.

2. The process according to Claim 1, wherein Step (A) is a step of kneading S- (3-aminopropyl) thiosulfuric acid having a median diameter (50%D) of 10 µm to 70 µm, a rubber component and a filler.
